(19) Europäisches Patentamt

European Patent Office

Office européen des brevets

(11) EP 0 799 664 A2

(12) **EUROPEAN PATENT APPLICATION**

(43) Date of publication:
08.10.1997 Bulletin 1997/41

(51) Int. Cl.6: **B23C 5/20**

(21) Application number: 97105608.0

(22) Date of filing: 04.04.1997

(84) Designated Contracting States:
DE FR GB

(30) Priority: 06.04.1996 JP 110178/96

(71) Applicant: **Daishowa Seiki Co., Ltd.**
**Higashiosaka-shi, Osaka 579 (JP)**

(72) Inventor: **Kubo, Haruaki**
**Nara-shi, Nara (JP)**

(74) Representative: **Marsh, Roy David et al**
**Hoffmann Eitle,**
**Patent- und Rechtsanwälte,**
**Arabellastrasse 4**
**81925 München (DE)**

(54) **Throw away tip**

(57)     A throw away tip is two-fold symmetric with respect to its center line. The tip has a bottom face C-J-K-D which can be fixed to a mounting seat of a holder, and a front face A-B-I-H which is a cutting face. In order to provide an axial rake, the two diagonal vertexes A and I are higher than the other two vertexes B and H. The tip also has side flanks A-D-C-B and I-H-K-J which are convexly curved to reduce the clearance angles. The reductions in the clearance angles at the higher vertexes I and A are larger than those at the lower vertexes B and H, so that the angles approach each other. This always maintains the clearance angles along the cutting side A-B, reducing the chipping of the cutting edge.

FIG.8

# Description

## Background of the Invention and Related Art Statement

The present invention relates to improvement of a tip for a rotary cutting tool of, for example, the perpendicular shoulder cutting type. Herein, a rotary cutting tool is what includes a rotor fitted with removable tips on its periphery. The rotor is rotated on its axis to cut an object. With the locus of rotation of a cutter assumed, the circumferential surface described by the cutter is referred to as the "cutting circumferential surface", which plays an important part for the invention. This surface differs from the peripheral surface of the cutter body (holder or base) itself.

A throw away tip is formed in two-fold or three-fold symmetry for use with its orientation changed two or three times (four or six times in some cases). A three-fold symmetric throw away tip is generally a hexagon which approximates a triangle. A two-fold symmetric throw away tip is a parallelogram or a rectangle.

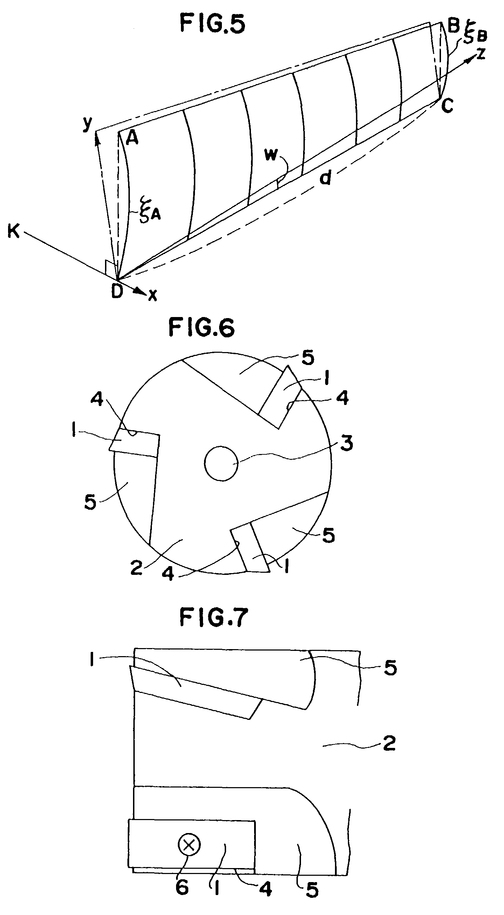

A holder has a number M of mounting seats formed in its periphery. A tip is fixed to each of the seats with a screw or the like. There is a chip pocket immediately in front of each of the seats. In the direction of rotation, the pocket precedes the seat. The pockets and the seats in pairs are formed at the number M of places. With reference to Figs. 6 and 7, a perpendicular shoulder cutting type end mill will be described. Figs. 6 and 7 show an example with three throw away tips 1. A cylindrical holder 2 has three mounting seats 4 formed in its peripheral surface. Each of the tips 1 is fixed to one of the seats 4 with a screw 6. The top face of each tip 1 is a cutting face, which faces a chip pocket 5. When the holder 2 rotates on the shaft 3, the cutting faces of the tips 1 cut an object.

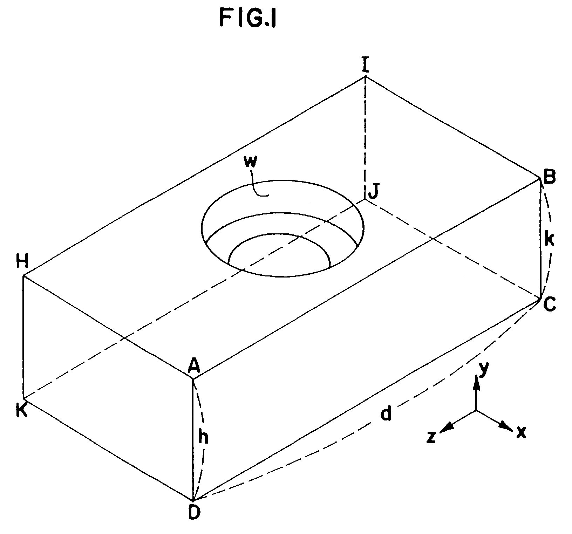

Fig. 1 shows the basic form of a throw away tip, which is a rectangular parallelopiped. The basic form is not always a form in actual use, but is illustrated to define the edges of the parallelopiped. The front face is A-B-I-H, and the back face is D-C-J-K.

Because of the two-fold symmetry, the points A, B, C and D are equivalent to the points I, H, K and J, respectively. Hereinafter, one of the equivalent points in each pair and one of the faces may represent both.

The front quadrilateral A-B-I-H is the cutting face. The bottom quadrilateral D-C-J-K is the face which will contact and be fixed to a mounting seat of a holder. The side faces A-D-C-B and H-K-J-I are one pair of flanks. The end faces H-K-D-A and I-J-C-B are the other pair of flanks. A tapped hole w extends through the tip between the front and back faces. This tip is a broadways or broadwise placement type throw away tip, which can be fixed to a mounting seat of a holder (cutter body or base) with a bolt or the like. The seat has a face which is generally perpendicular to the circumference of the holder. The bolt extends generally circumferentially of the holder.

A tip clearance angle $\Phi$ strongly affects the cutting performance. A flank is a cutter face which faces a surface formed by the cutting edge of the cutter. The angle between the flank and the formed surface is a clearance angle. If the clearance angle is small, the cutter rubs against the formed surface, so that the wear and the heat generation are great and the resistance is high. Contrariwise, if the clearance angle is large, the cutting edge breaks off easily. Thus, the proper clearance angle depends on the tip type. It is empirically known roughly how large the proper clearance angle is for a tip.

For example, the optimum clearance angle for a tip of a shoulder end mill is about 6 degrees. The tip shape should preferably be designed so that the clearance angles are between 3 and 8 degrees all over the cutting edges. In practice, however, it is not possible to do so.

The conditions for a perpendicular shoulder cutting tip are that it is placed broadwise and that a part or all of its cutting edge A-B cuts an object. If, as shown in Fig. 1, the side face A-B-C-D is a simple rectangle and both sides A-D and B-C are equal (A-D = B-C), and when the base is fixed to a mounting seat which is parallel to the cutter axis, the side A-B is positioned at an equal distance from the axis. It is therefore possible for the cutting face A-B-I-H and a surface formed by the face to meet at the same angle. In other words, the clearance angle $\Phi$ can be 6 degrees over the length of the side B-A (or side I-H). It is also possible for the clearance angle(s) to be 6 degrees if the end face A-H-K-D and the flank A-D-C-B are trapezoids with equal legs (A-D = H-K = C-B = J- I). In practice, however, such a tip which is a simple rectangular parallelopiped is not used by being fixed to a seat parallel to the cutter axis.

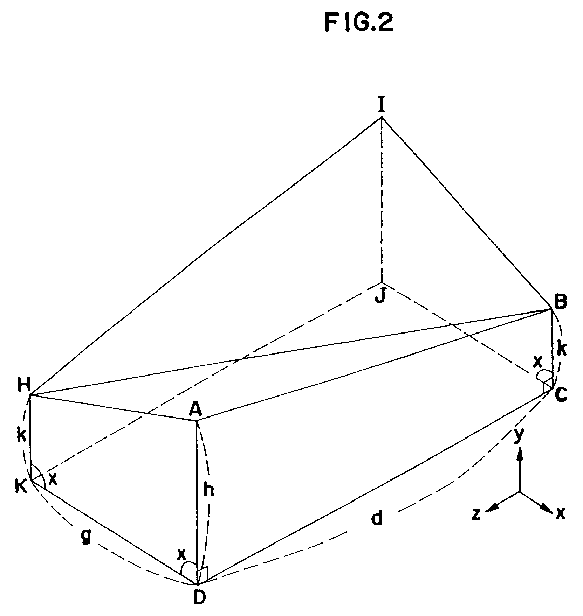

If a tip or a mounting seat of it has an axial rake (angle), its cutting ability is raised. Fig. 2 shows a tip with an axial rake, which makes the front point A of the cutting edge higher than the rear point B. That is to say, A-D > C-B (I-J > K-H). The edges A-B and H-I incline relatively to the bottom face. The edges H-A and I-B of the end faces, too, incline. Then, the front face I-H-A-B is no longer a plane. Both the side face A-D-C-B and the end face H-K-D-A are asymmetric. Even in this case, both points A and B must contact the cutting circumferential (cylindrical) surface having a radius r. The distances between the cutter axis and the point A and between the axis and the point B are r.

The axial rake of the tip shown in Fig. 1 is 0 degree. The tip shown in Fig. 2 has an own axial rake.

Apart from this, in some cases, mounting seats are formed at an angle with the cutter axis. The (angle of) inclination of a mounting seat relative to the axis is the axial rake of the seat. If a throw away tip is fixed to an inclined mounting seat, the actual axial rake is the sum of the inclination of the seat and the inclination of the cutting edge A-B of the tip. In other words, the actual axial rake is the sum of the axial rake of the seat and the axial rake of the tip.

The other rake is the angle between the cutting face H-A-B and the circumferential surface, and is referred to as a "radial rake $\psi$. This is the rake when the side A-B cuts an object. This rake is questionless or out of court for the present invention, but is another important factor.

If a tip as shown in Fig. 2 is fixed to a mounting seat parallel with the cutter axis, or if a tip as shown in Fig. 1 or 2 is fixed to a mounting seat inclined relatively to the axis, the points A and I are higher, and the points B and H are lower. In any case, the flanks, namely, the side faces A-D-C-B and I-H-K-J were flat in the past. The tip and/or the seat gave an axial rake, but the tip flanks were always planes. This was a problem.

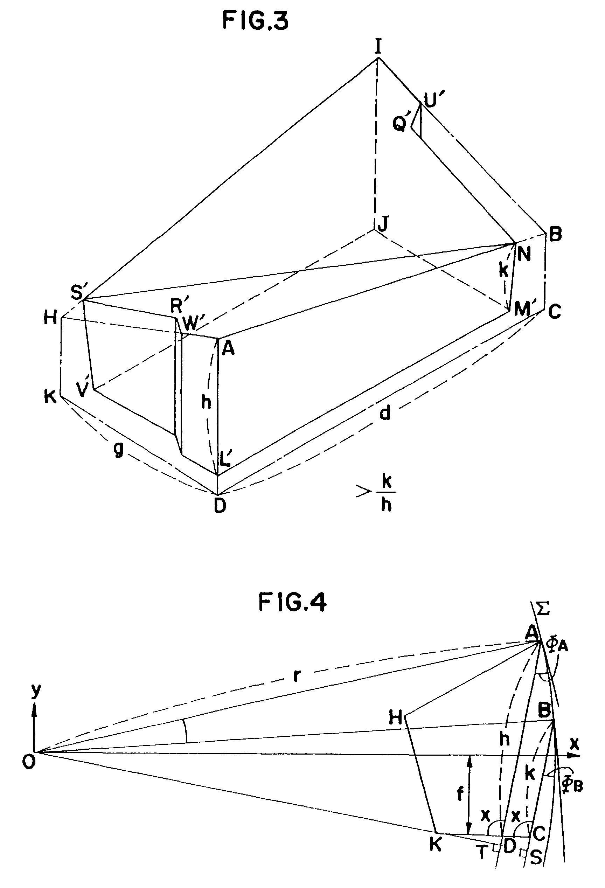

In practice, as shown in Fig. 3, an end face, too, may have minor cutting edges like the steps S'-R'-W'-A. In practice, otherwise the tip shape is more complex.

It is, however, the object of the present invention to improve the shape of the flank A-D-C-B, so it does not matter how the end face is shaped. The end face is rough, so the flanks are not simple trapezoids. In the past, however, the flanks were planes. For the invention, it does not matter how large the flanks are, but the flatness is significant. Therefore the flanks are expressed by A-D-C-B and I-H-K-J, and the flanks containing the points A and B are expressed with such points D and C that $\angle ADC = \angle R$ (right angle) and $\angle BCD = \angle R$ (right angle). That is to say, the points D and C should be considered as the feet of the perpendiculars extending from the cutting edge A-B at right angles to the base.

It is assumed that $\angle ADK = \angle BCJ = \angle HKD = \angle IJC = \chi$, which is a right or obtuse angle. A flank is expressed as A-D-C-B, but in practice has an area smaller than this. The flank, however, is contained by this face, so the expression "flank A-D-C-B" is proper. The base D-C has a length d. The base K-D of an end face has a length g. Naturally, the height of the point H is $k \sin\chi$, and the height of the point A is $h \sin\chi$.

A tip mounting seat may provide an axial rake by itself inclining relatively to the holder axis. In order to simplify the problem, however, the axial rake of the seat is assumed 0 degree. In other words, the mounting seats of the holder are assumed such that the bottom face J-K-D-C of the tip mounted on each of the seats is parallel with the Z-axis.

Fig. 4 shows the circumstances, and is a projected plan where the cutting circumferential surface $\Sigma$, a tip etc. are projected on an x-y plane. In Fig. 4, the side A-D (h) is longer than the side C-B (k), and the point A is higher than the point B. Both points A and B must, however, contact the surface $\Sigma$ having a radius r. Then, the base D-C is out of parallel with the Z-axis, and the point C is outward relatively to the point D. The base D-C inclines relatively to the holder axis. The conditions are put in order as follows.

1. The flanks A-D-C-B and I-H-K-J must be planes.
2. Both points A and B must contact the cutting circumferential surface $\Sigma$.
3. Because the tip itself or the mounting seat, or both have a make (axial rake), the point A on the cutting edge is higher than the point B thereof.

The clearance angles at the points A and B are $\Phi A$ and $\Phi B$, respectively. At the angles $\Phi A$ and $\Phi B$, the tangents to the cutting circumferential surface at the points A and B meet the sides A-D and B-C, respectively.

The side A-D is longer than the side B-C. The points A and B contact the cutting circumferential surface. This displaces or positions the point C outward. The base D-C inclines relatively to the Z-axis. Therefore the clearance angle $\Phi_A$ at the point A is larger than the clearance angle $\Phi_B$ at the point B ($\Phi_A > \Phi_B$). Then, even if $\Phi_B = 6$ degrees, $\Phi_A$ does not become the optimum clearance angle. In some cases, $\Phi A$ was 15 or more degrees.

In Fig. 4, the cutting circumferential surface $\Sigma$ is described as the circle with its center on the axis O and with the radius r. The tip end face H-K-D-A is described, behind which the side C-B is seen. The tip bottom face K-D-C-J is described as the line segment/s K-D-C. The side D-C is not parallel with the axis, and the point D is inward relatively to the point C.

As stated above, Fig. 4 is a projected plan on an X-Y plane. In this plan, a perpendicular from the axis O meets the side A-D at its foot T. Another perpendicular from the axis O meets the side B-C at its foot S.

The clearance angle $\Phi A$ at the point A is the angle between the side A-D and the tangent to the circle $\Sigma$ at the point A. The clearance angle $\Phi B$ at the point B is the angle between the side B-C and the tangent to the circle $\Sigma$ at the point B. $\angle OTA = \angle OSB = 90$ degrees because the flank A-D-C-B is flat. This equation expresses the flatness of the flank. In the triangles O-A-T and O-B-S, $\angle AOT$ and $\angle BOS$ are the clearance angles $\Phi_A$ and $\Phi_B$, respectively.

$$\sin\Phi_A = (h + DT)/r \qquad (1)$$

$$\sin\Phi_B = (k + CS)/r \qquad (2)$$

$h > k$, and C-S is nearly equal to D-T, so $\Phi_A > \Phi_B$.

Then, even if the clearance angle at the rear end point B can be 6 degrees, the clearance angle at the front end point A is largely off the optimum value (between 5 and 7 degrees). In some cases, $\Phi_A$ exceeds 15 degrees. The clearance angle at the front end is too large. Fig. 4 shows a case where the inclination of a tip mounting seat is 0 degree. If the seat has an inclination (axial rake), the ratio of $\Phi_A$ to $\Phi_B$ is much larger.

If the clearance angle $\Phi A$ at the front end (point A) is so large that excessive force is applied to the tip, the cutting edge of the tip may be damaged near the point A. In the past, however, there were no means for solving such a problem. Force is applied to the steeple point A most, which breaks off easily. It is a problem that the clearance angle at the point A is such a large value, because the cutting edge chips easily. Such a large clearance angle reduces the strength of the cutting edge, and is therefore not desirable.

## Summary of the Invention

It is a primary object of the present invention to provide a tip having a cutting edge A-B with a smaller clearance angle even at the front end A of the edge so that the edge may not chip.

If a broadwise placement type throw away tip has a large axial rake, the inclination of its cutting side A-B relative to the rotation axis is large. The difference between the height h of the higher cutting point A and the height k of the lower cutting point B is h - k. The inclination is the quotient of the difference (h - k) divided by the length d of the tip. When the rotating tip cuts a material, the optimum clearance angles range between 3 and 7 degrees. If a flat face is a flank as was the case in the past, the clearance angle at the higher vertex is excessive. Contrariwise, this invention has a flank convexly curved to reduce the clearance angles. The curvatures in the clearance angle directions at the points A and B are represented by $\xi A$ and $\xi B$, respectively. The reductions in the clearance angles at the higher and lower vertexes are represented by $h\xi A$ and $k\xi B$, respectively. By making the reduction $h\xi A$ larger than the reduction $k\xi B$, it is possible to equalize the clearance angles at the cutting side A-B, thereby improving the strength of the cutting edge remarkably.

A throw away tip according to the present invention has a flank A-D-C-B or I-H-K-J curved convexly to make the clearance angle $\Phi_A$ at the tip vertex A or I smaller. By devising or designing the form of the convex surface, it is also possible to keep the clearance angles constant along the cutting side A-B.

In addition, with the axial and radial rakes of this invention large, it is possible to keep the cutting edge of the tip strong, so that the tool life is very long.

## Brief Description of the Drawings

Fig. 1 is a perspective view showing the basic form of a broadwise placement type throw away tip.

Fig. 2 is a perspective view showing the principle type of throw away tip which has a cutting edge A-B with the front end point A made higher than the rear end point B to provide an axial rake.

Fig. 3 is a schematic perspective view of a tip with each cutting end face having a step.

Fig. 4 shows that, when a tip having an inclined cutting edge A-B cuts an object, the edge keeps contacting the cutting circumferential surface, and the clearance angles at the points A and B differ from each other.

Fig. 5 is a schematic view showing a flank of a tip according to the present invention. The flank is curved convexly.

Fig. 6 is a front end view of a perpendicular shoulder cutting type cutter.

Fig. 7 is a side view of the cutter shown in Fig. 6.

Fig. 8 is a perspective view showing the schematic outline of a tip according to the invention.

Fig. 9 is an end view of the tip shown in Fig. 8.

Fig. 10 is an end view of the tip shown in Figs. 8 and 9, but showing the tip turned a little so that the points A and B contact the cutting circumferential surface.

Fig. 11 is an end view of a tip according to the invention which has a convexly curved flank. Fig. 11 shows that, when the tip contacts the cutting circumferential surface at A-B, the difference between the clearance angles at the points A and B is small.

Fig. 12 is a perspective view of a tip according to the invention which has a linear cutting edge A-B and a convexly curved flank. Fig. 12 shows that, when the tip contacts the cutting circumferential surface at A-B, the difference between the clearance angles at the points A and B is small.

Fig. 13 is a perspective view of another tip according to the invention, which has a convexly curved cutting edge A-B and a convexly curved flank. Fig. 13 shows that, when the tip contacts the cutting circumferential surface at A-B, the difference between the clearance angles at the points A and B is even smaller.

## Detailed Description of Related Art and of Preferred

## Embodiments of the Invention

As stated above, the flank A-D-C-B was charged with the three conditions 1 - 3. As a result, the clearance angle $\Phi_A$ at the steeple point A of the cutting side A-B was excessive.

In order to solve this difficult problem, the present invention excludes the condition 1, while the conditions 2 and 3 are maintained. With the flatness condition 1 excluded, the flanks A-D-C-B and I-H-K-J are curved to be convexly curved surfaces. By making the flank A-D-C-B convex, it is possible to reduce the clearance angle at the point A and restrain the clearance angle at the point B from reducing. Of course, all convexly curved surfaces are not good. It is made a condition that the clearance angle $\Phi_A$ at the point A can be small. Even on such a condition, the number of degrees of freedom to design a curved surface depends on whether the base D-C is linear or circular also.

Even if the base D-C is a straight line (segment), it is alternative whether the curved surface is uniaxial or biaxial.

### 1. General Conditions

The most general requirements will be stated. $\xi$ represents the circumferential (Y-direction) curvature at an arbitrary point. $\zeta$ represents the axial (Z-direction) curvature at an arbitrary point. The outward curvatures are defined as positive. A convexly curved surface satisfies the inequality "$\xi + \zeta > 0$" at every point in its area. To this invention, it is essential that part of the flank A-D-C-B which includes at least the edge A-B be convex.

$\xi_A$ and $\zeta_A$ represent the circumferential and axial curvatures, respectively, at a point A of a curved surface. $\xi_B$ and $\zeta_B$ represent the circumferential and axial curvatures, respectively, at a point B of a curved surface. These definitions will be reconfirmed with the coordinates in Figs. 4 and 2. The rotation axis of a holder is the Z-axis. The bottom face of a mounting seat of the holder is placed on the Z-X plane. In other words, the bottom face is perpendicular to the Y-axis. To be circumferential is tangent to the cutting circumferential surface on the X-Y plane. In other words, to be circumferential at a point (x, y) is the direction of a vector (-y, x). To be radial is the direction of a vector (x, y). $\xi A$ is the circumferential curvature at the point A. The clearance angles are independent of the axial curvature $\zeta$ and determined by the circumferential curvature $\xi$.

The reductions in the clearance angles at the points A and B are $\Delta\Phi_A$ and $\Delta\Phi_B$, respectively. A comparison is made between the clearance angle at the point A positioned on a circular arc which is described from a point D and which has a curvature $\xi A$ and that at the point A now positioned on the line tangent to the arc at the point D (the distances between A and D are the same). The reduction at the point A is the comparative reduction in the clearance angle when the point A is positioned on the arc. The reduction at the point B is similar to this.

$$\Delta\Phi_A = h\xi_A \qquad (3)$$

$$\Delta\Phi_B = k\xi_B \qquad (4)$$

It is essential that the reduction at the point A be larger even if the reduction is small. Therefore effect is taken if the following inequality is satisfied.

$$\Delta\Phi_A > \Delta\Phi_B \qquad (5)$$

In other words, it is essential that the following inequality be satisfied.

$$\xi_A / \xi_B > k/h \qquad (6)$$

This is a general condition.

## 2. Uniaxial Curved Surface of Uniform Curvature

Originally h > k, so the clearance angle reduction at the point A is larger even if the circumferential curvatures are the same. In other words, even if $\xi_A = \xi_B$, the inequality (5) can be satisfied. Inclusive of such a case, the inequality (6) states that effect is taken even if $\xi_A$ is smaller than $\xi_B$, that is to say, even if the radius of curvature at the point A is larger than that at the point B.

## 3. Equal Clearance Angle at Every Point between A and B

This is an ideal case, where, at every point on the side A-B, the clearance angle can, for example, be 6 degrees, and the curvature of the curved surface is only circumferential, that is, along the Y-axis. Can such a curved surface exist? There are some.

Fig. 5 shows a flank A-D-C-B of a throw away tip, and is also a view for explaining a coordinate system. When the base D-C is projected on the X-Y plane, it meets the Z-axis at a small angle w. This is provided by the equation (3) as explained above.

The four points A, D, C and B are positioned on the same plane. This is a flat flank as shown in Figs. 2 and 3. In accordance with this invention, a convexly curved surface is based on this plane. The curvature in the Y-direction is $\xi$. In other words, the curve has a single curvature on every plane perpendicular to the Z-axis. This curvature is a function of z and therefore $\xi(z)$. On the assumption that the height of the edge A-B is y(z), it can be expressed as follows.

$$y(z) = h - (h - k)z/d = h - qz \qquad (7)$$

where q = (h - k)/d . z is considered as an independent variable. y and x are considered as dependent variables. The clearance angle $\Phi$ is a function of z. $\Phi$ is expressed in radians as follows.

$$\Phi(z) = \sin^{-1}(y+c)/r - \xi(z)y(z) \qquad (8)$$

where c is a constant determined by h, g, r, d and k. It is possible to make the clearance angle $\Phi(z)$ constant, on the assumption that r is sufficiently larger than y, by satisfying the following equation.

$$\xi(z) = (1/r) + (c/ry) - (\Phi/y) \qquad (9)$$

By substituting the equation (7) into the equation (9), it is possible to obtain an equation for $\xi$ in relation to z. If the mounting seat itself is inclined, it is possible to make a calculation by replacing the inclination q in the equation (7) with the inclination q' including the inclinations of both. The overall length of the side A-B contacts the cutting circumferential surface, so that the side itself must be a convex curve. The radius of curvature of this curve is $r/q^2$.

With reference to Figs. 6 and 7, an embodiment of the present invention will be described. A cylindrical holder 2 has three notches or recesses each with a flat mounting seat 4, to which a generally rectangular throw away tip 1 is fixed with a bolt 6. The tip is a broadwise placement type tip. The holder has tapped holes extending circumferentially for engagement with the bolts 6. A chip pocket 5 is defined in each of the recesses. The top face of the tip is the cutting face. Fig. 3 is a schematic perspective view of a tip, from which the tapped hole is omitted. The hole extends vertically in the center of the tip. When the tip bottom face D-C-J-K is fixed to the flat seat of the cutter body, the inclination of the side A-B from the horizontal is the axial rake. The inclination of the face A-H-B is the radial rake.

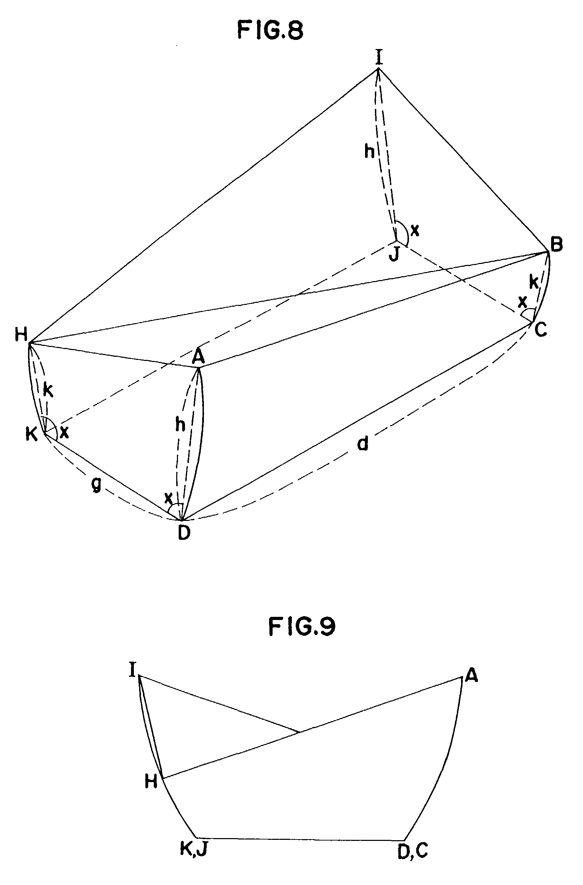

Fig. 8 is a schematic perspective view of a throw away tip according to an embodiment of the present invention. For simplification, the tapped hole is not shown. The tip has a flat bottom face K-D-C-J. The distance between the end faces is d. The length of the side D-K = g . The-tip is shaped in two-fold symmetry, and has higher vertexes I and A and lower vertexes H and B. The line segment A-D = h ; the line segment H-K = k ; h > k. The side A-B is inclined for the axial rake. The inclination is $\tan^{-1}(h-k)/d$ . The segment A-D meets the base K-D at an angle $\chi$.

It is essential to the invention that the face A-D-C-B is a convexly curved surface. Both sides A-D and B-C are curves, which function to decrease the clearance angle along the side A-B. The function of decreasing the clearance angle increases toward the point A, so that the difference between the clearance angles at the points A and B is small.

Fig. 9 is an end view of the throw away tip. The end face is surrounded by the curves A-D and I-K, etc. The tip is made of heated and pressurized hard metal powder. As shown in Figs. 8 and 9, the tip is thus surrounded partially by smooth curves. Besides, the top of the tip is wider than the bottom. In other words, the flanks A-D-C-B and I-H-K-J are convexly curved surfaces with draft angles. It is therefore possible to make the tip by hardening the powder with a mold, and pick the molded tip out of the mold easily by pushing the tip with a pin.

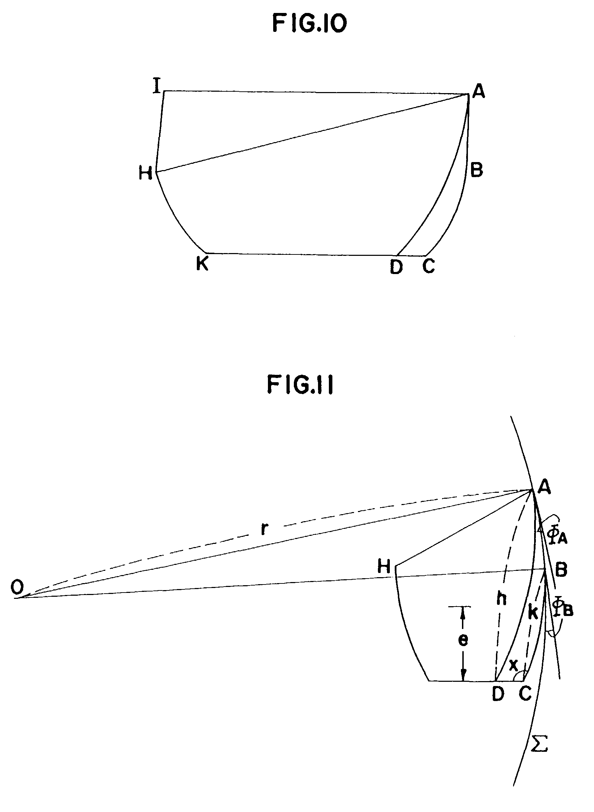

Fig. 10 shows the tip turned a little from the position of Fig. 9. The curve C-B is seen behind the curve A-D. Even if the curvatures of the two curves are the same, a sufficient effect is made (produced).

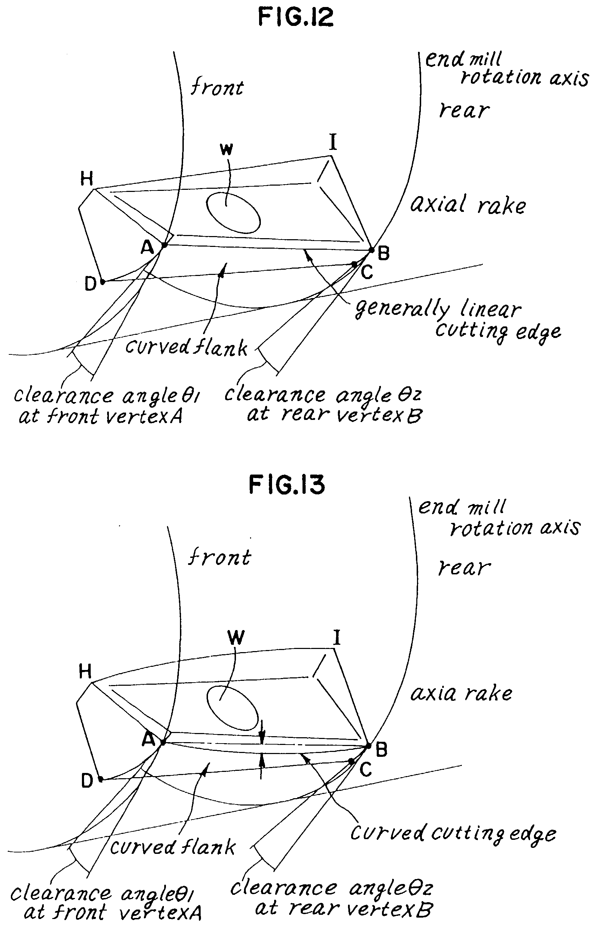

Fig. 11 shows the tip (being) fixed to a mounting seat of a holder. The side A-B must contact the cutting circumferential surface. Because of the inclination of the side A-B, the side D-C is not parallel with the holder axis. Fig. 11 shows the clearance angle $\Phi A$ to be decreased because of the curve A-D.

The mounting seats of a holder may be concavely curved surfaces in correspondence with the tip flanks. This increases the touch area between each of the seats and the tip on the associated seat. Microscopically, however, even the contact between a flank having a flat surface and a flat mounting seat is merely point contact because of manufacturing errors etc. of the tip and the body, since even a flat surface is microscopically still rough. Therefore, for the tip of the present invention, the mounting seat may be a flat surface. Even if the contact is point contact, there is no hindrance. This is because it is not easy to contact the two surfaces exactly with each other even if the seat is concave.

Fig. 12 shows the tip and the cutting circumferential surface when the mounting seat, too, has an axial rake. The side A-B is a straight line. The tangents to the cutting circumferential surface which extend via the points A and B are not parallel with the base D-C. $\theta_1$ and $\theta_2$ represent the (clearance) angles at which the tip flank meets the tangents to the cutting circumferential surface at the points A and B, respectively. The sum of the inclinations of the tip itself and the seat is the substantial axial rake. It is found that, even with such a large axial

rake, the difference $(\theta_1-\theta_2)$ between the clearance angles . $\theta_1$ and $\theta_2$ is small because the face A-D-C-B is a convexly curved surface of large curvature.

Fig. 13 is a perspective view showing a more specific tip with a convexly circular side A-B and the cutting circumferential surface to explain advantages of this invention. In this case, also, the mounting seats are inclined. The face A-D-C-B is a convexly curved surface. The side A-B is a convexly circular arc. Because the side A-B is a circular arc, its overall length can contact the cutting circumferential surface. It is found that the difference $(\theta_1 - \theta_2)$ between the clearance angles at the points A and B is even smaller.

Each of the embodiments has a tapped hole formed through the tip center between the clamp face A-B-I-H and the bottom face D-C-J-K. A clamp screw can extend through the hole and engage with a holder so as to clamp the tip on the holder. The present invention, however, is not always limited to this structure. Of course, the tip might be clamped on the holder by a lever clamp, a wedge-on-clamp means, or another known clamping means.

**Claims**

1. A throw away tip having:

    a bottom face which can be fixed to a mounting seat of a holder;
    a front face which is a cutting face for cutting an object, and is also a clamp face for clamping the tip on the holder; and
    a side face which is a major flank;
    part or all of the flank which includes at least the cutting edge being a convexly curved surface.

2. A throw away tip which is nearly rectangular and has:

    a cutting edge area formed two-fold symmetrically around its center;
    a bottom face D-C-J-K which can be fixed to a mounting seat of a holder;
    a front face A-B-I-H which is a cutting face for cutting an object, and is also a clamp face for clamping the tip on the holder;
    a side face A-D-C-B or I-H-K-J which is a major flank; and
    a cutting side (edge) A-B or I-H inclined relatively to the bottom face to provide an axial rake;
    the length h of the line segment A-D ( A-D = h ) being larger than the length k of the line segment B-C ( B-C = k ) (h > k);
    the flank A-D-C-B or I-H-K-J being a convex surface;
    the curvatures $\xi_A$ and $\xi_B$ of the convex surface at the points A and B, respectively, satisfying

an inequality $\xi_A / \xi_B > k/h$.

3. A throw away tip which has a convex flank according to Claim 1 or 2, wherein the clearance angle $\Phi$ is a constant angle between 3 and 7 degrees at every point on the cutting edge A-B in contact with the cutting circumferential surface defined as the envelope of the cutting edge locus with the same radius.

# FIG.I

# FIG.2

# FIG.3

# FIG.4

## FIG.5

## FIG.6

## FIG.7

## FIG.8

## FIG.9

## FIG.10

## FIG.11

EP 0 799 664 A2

# FIG.12

end mill
rotation axis

rear

front

W        I

H

A        B
         C
D

axial rake

generally linear
cutting edge

curved flank

clearance angle θ1
at front vertex A

clearance angle θ2
at rear vertex B

# FIG.13

end mill
rotation axis

rear

front

W        I

H

A        B
         C
D

axia rake

curved cutting edge

curved flank

clearance angle θ1
at front vertex A

clearance angle θ2
at rear vertex B

14